# EUROPEAN PATENT SPECIFICATION

(11) **EP 3 681 802 B1**
(45) Date of publication and mention of the grant of the patent: **03.12.2025**
(21) Application number: 18779954.9
(22) Date of filing: 13.09.2018
(51) Int. Cl.: B64U 70/92, B64U 70/95, B64U 80/10, B64U 80/70, B64U 80/86

(54) **UAV FACILITY**
UAV-ANLAGE
INSTALLATION POUR VÉHICULES AÉRIENS SANS PILOTE (UAV)

(30) Priority: 13.09.2017 US 201762558192 P; 31.07.2018 GB 201812484
(43) Date of publication of application: 22.07.2020
(73) Proprietor: Flirtey Holdings, Inc., Reno, NV 89510 (US)
(72) Inventor: SWEENY, Matthew, Reno NV 89510 (US); FOGGIA, John R., Reno NV 89510 (US); HAYDEN, Jess, Reno NV 89510 (US); RINALDI, Joseph, Reno NV 89510 (US)
(74) Representative: EIP
(86) International application number: PCT/US2018/050949
(87) International publication number: WO 2019/055702

(56) References cited:
- EP-A1- 3 124 380
- WO-A1-2018/039784
- CN-A- 104 734 294
- CN-A- 106 904 288
- CN-A- 107 284 686
- US-A1- 2016 159 496
- US-A1- 2016 311 329
- US-A1- 2017 158 353
- US-A1- 2017 225 799
- US-A1- 2017 225 802
- US-A1- 2018 009 549

## Description

### BACKGROUND OF THE INVENTION

### Field of the Invention

The present disclosure relates to an unmanned aerial vehicle facility.

### Description of the Related Technology

Delivery services offered by commercial carriers deliver goods to recipients. A typical delivery service maintains a large fleet of vehicles, including airplanes, trucks, and small vehicles. Airplanes and trucks move packages between mail sorting facilities, and smaller vehicles move the packages from the sorting facilities to delivery destinations such as homes or businesses. Such delivery services have some drawbacks and may not be efficient in catering to the needs of the consumers or businesses today. For example, such delivery services involve significant investment to procure and maintain the fleet of vehicles, and to manage the human resources required to operate the fleet. Another problem with such delivery services is that they may be incapable of delivering the goods in a short amount of time, such as in a few minutes or hours from the time the order is placed by the consumer. However, even if these delivery services can deliver the goods in a short amount of time, it can be very expensive for the consumer.

An unmanned aerial vehicle (UAV), such as a drone, can be utilized to transport packages that can include food, merchandise, or other items. Such a UAV delivery service can overcome some of the problems discussed above with respect to the conventional delivery services; however the UAV delivery service can still have certain issues that affect the quality of service. For instance, UAV delivery services typically require UAV facilities within buildings, such as warehouses, which store packages for delivery. These facilities often require extensive modification, which is costly. Alternatively, humans may need to manually transport each package outdoors to provision the package to a UAV before takeoff. Such a manual provisioning process can be labor intensive, are subject to the vagaries of human behavior and increase delivery time.

Accordingly, there is a need for an improved UAV facility which overcomes problems with existing UAV facilities.

US2017/0225802 describes a launcher that can include one or more containers, or hangars configured to house vertical take-off and landing UAVs. The system can further include a UAV orientation and charging module configured to mechanically position a UAV within a container and facilitate electrical mating mid charging of a battery in the UAV.

CN106904288 describes a vehicle-mounted fixed platform of a rotor-wing type unmanned aerial vehicle.

US2017/158353 describes an aerodrome providing safe storage for UAVs that includes an enclosure to protect the UAVs from the weather. The Aerodrome includes a foldable flight deck.

### SUMMARY

According to a first example of the present disclosure, which is not claimed, there is provided an unmanned aerial vehicle (UAV) facility comprising a transportable housing for holding a UAV, the housing defining a landing area for the UAV, and a structure comprising wind-reducing netting for reducing wind speed across the landing area.

According to a first aspect of the present invention, there is provided a UAV facility, comprising a transportable housing for holding a UAV, the housing defining a landing area for the UAV, and an erectable wind-porous structure for reducing wind speed across the landing area.

UAV facilities embodying the first example and first aspect are transportable, and may be suitable for outdoor use. For example, the housing may be mounted upon wheels so that it can be towed by a vehicle. Alternatively, the UAV facility may itself be a vehicle. The transportable UAV facility may be used by one or more businesses or individual users to house UAVs which deliver packages to recipients. By utilizing such a UAV facility, buildings need not be modified to accommodate UAVs. Businesses, for example, may purchase or rent such a UAV facility and place the UAV facility nearby, such as on a driveway or in a car park. The housing may be stocked with items for purchase, and upon receiving an order, the item may be automatically loaded onto a UAV before the UAV takes flight and delivers the item to the customer. Alternatively, items may be stocked in a nearby building, and upon receiving an order, a human, robot, vending machine or conveyor system can deposit the ordered item into an ingress/ingestion port on the housing from where it is automatically loaded onto a UAV.

The transportable nature of the UAV facility allows the facility to be moved between different locations. For example, owners of the UAV facility may move the facility into a garage for additional security. Similarly, the UAV facility may be transported to a maintenance facility if the UAV facility requires repair.

Such UAV facilities may be required to withstand a variety of weather conditions, such as rain and snow. In addition, wind can cause problems during UAV takeoff and landing, and while the UAV is located on the landing area of the UAV housing. For example, strong winds can make it difficult for a UAV to land safely and in a controlled manner. Controlled landing may be required in situations where the UAV is used to collect or drop-off a package, undergo maintenance, or a battery swap procedure, for example. Inaccurate landing may damage the UAV and/or nearby objects, and may injure people within the vicinity of the UAV facility.

To provide protection from the wind, the UAV facility comprises a structure for reducing wind speed across the landing area/surface. The structure may be wind reducing netting, as in the first example, or it may be an erectable wind-porous structure, as in the first aspect. In either case, protection against the wind is provided. Thus, as a UAV comes in to land, takes off, or rests upon the landing surface, the wind speed can be reduced which allows the UAV to operate with reduced impedance from external factors.

The housing may be suitable for storing one or more UAVs. For example, a UAV may be stored within the housing when not in service. In some arrangements, a UAV may be stored on the landing area. The housing may only temporarily hold/house the UAV. For example, a UAV may be fully or partially housed within the housing during package collection/drop-off, during maintenance, or during a battery swap or battery recharge procedure.

The landing area may also be known as a landing surface. The landing surface may be an external surface of the housing, or it may be an additional surface mounted or attached to an outer surface of the housing.

As mentioned, the UAV facility according to the first example comprises wind reducing netting. The netting comprises an open meshed material through which at least a portion of the wind can pass. The netting may be formed by intertwining one or more separate materials, such as rope, string, twine, plastic, metal, etc. Alternatively, the netting may be monolithic, thereby being formed of a single material comprising apertures. Netting provides a lightweight, inexpensive solution for reducing windspeed.

It has been found that porous structures can be more efficient at ameliorating the effects of turbulence than a solid windbreak structure. In addition, the netting allows a portion of light or other electromagnetic radiation to pass through. This may be desirable in cases where the UAV is equipped with one or more sensors. For example, an onboard camera may still be able to "see" through the netting to allow the UAV to determine its position relative to the ground or landing surface. Similarly, LASER and LIDAR positioning signals can pass through the netting with an acceptable level of attenuation. Additionally, should the UAV collide with the netting, the damage caused to the UAV may be lower than that which would have otherwise occurred if the UAV had collided with a more solid structure.

In some scenarios, the netting also acts as a safety barrier; stopping the UAV from falling onto the ground or pedestrians below, and stopping people or animals from climbing onto the landing area.

The structure comprising the wind-reducing netting may also comprise one or more rigid elements to support the wind-reducing netting. The elements should be rigid enough to support the wind-reducing netting during periods of at least low wind-speeds, without breaking. A single rigid element may support the netting. For example, the netting may be attached to a frame. Alternatively, a plurality of rigid elements may together support the netting.

In some examples, the structure is erectable. This allows the netting to be dismantled or folded down. In a specific example, the structure is erectable into a first configuration, wherein in the first configuration, the wind-reducing netting extends away from the landing area in a direction above the landing surface. The structure may be moveable into a second configuration in which the netting is arranged on the landing area, or is arranged adjacent to a side surface of the housing. A person may also remove the netting by hand, and store it within the housing.

In certain examples, the wind-reducing netting may be arranged to substantially surround the landing area. For example, a single net may extend around the landing area, or a plurality of nets may be suspended around the landing area. By surrounding the landing area, greater protection from the wind can be provided.

As mentioned, the UAV facility according to the first aspect comprises an erectable wind-porous structure for reducing wind speed across the landing area.

The erectable structure is therefore collapsible, meaning that it can be folded down. Thus, the structure can be erected to reduce wind speed, and be folded down when not required. The structure can be folded away as the UAV facility is being transported, for example. This allows the UAV facility to be more easily transported because the UAV facility is more aerodynamic when the structure is in the folded configuration. The structure can also be folded away when it is not windy. By folding the structure away during low wind speeds, the airspace around the landing area can be maximized thus providing less of an obstruction during landing and take-off. A further advantage provided by the collapsibility of the structure is that the structure provides less of an obstruction during transport. For example, reducing the height of the structure allows the transportable UAV facility to pass under low bridges or other obstructions.

By being wind-porous, a portion of the wind can pass through the structure. As mentioned, this is often more effective than a solid structure. Solid structures can cause an area of low pressure to form behind the structure, which in turn causes air to flow into the area of low pressure from above. This creates turbulence and reduces protection behind the structure. A porous structure allows a portion of air to flow through the structure, which moderates the area of low pressure and turbulence. This can provide protection from the wind over a larger area. In addition, by having a structure that is both wind-porous and erectable in nature provides a synergistic effect in which the overall transportability of the UAV facility is improved. Both features combine to reduce drag during transportation, should the structure be attached to the UAV facility.

In the first aspect, the erectable wind-porous structure is a panel. In some arrangements, the panel has a first end and a second end which is connected to the housing via a connector assembly. The connector assembly is arranged to facilitate movement of the panel with respect to the landing area, the movement being between at least a first position and a second position. In the first position, the panel extends away from the landing area in a direction above the landing area, such that the first end of the panel is arranged at a first height. In the second position the first end of the panel is arranged at a second height, lower than the first height. Thus, the structure can be erected (i.e. be arranged in the first position), and be folded/collapsed (i.e. be arranged in the second position).

The first end may also be known as an upper end, because in the first position it is the uppermost end of the panel. The second end may also be known as a lower end, because in the first position it is the lower end of the panel.

Thus, in the second position, the first end of the panel is lower in height than it is in the first position. The height may be measured relative to the ground, upon which the UAV facility resides, or it may be measured relative to a base of the housing, for example.

The connector assembly may comprise one or more connectors. For example, a first connector may connect the panel to the housing, and a separate connector may facilitate movement of the panel with respect to the landing area. Alternatively, a single connector may connect the panel to the housing and facilitate movement of the panel with respect to the landing area.

"Extending away from the landing area in a direction above the landing area" means that the panel extends in an upwards, or upwards and outwards, direction such that the first end of the panel is arranged further away from the landing area than the second end of the panel. The panel may be arranged substantially vertically, or may be angled inwards or outwards with respect to the landing area.

"Connected to the housing" includes either being directly connected to the housing or being indirectly connected to the housing. For example, the panel may be connected to the housing via the landing area.

In some examples, the UAV facility comprises a drive mechanism which causes the movement between the two positions. The drive mechanism may comprise a controller which controls/instructs the movement. The drive mechanism may comprise one or more motors, or actuators, for example, which operate to move the structure.

In one arrangement, the connector assembly comprises a hinge to hingedly connect the panel to the housing, thereby facilitating rotational movement from the first position to the second position. In the second position, the panel is arranged substantially on top of the landing area. Accordingly, the panel may be folded into a configuration in which it is arranged on top of the landing area (i.e. the panel and landing area are superposed). This configuration means that the UAV facility maintains its original width when the panel is in this folded configuration. When on top of the landing area, the panel may be substantially parallel with the landing area, or an acute angle may extend between the panel and the landing area. The rotational movement may be towards the landing area. Alternatively, the rotational movement may be away from the landing area, and the panel may then translate onto the landing area.

In another arrangement, the housing comprises a side surface, and in the second position, the panel is arranged substantially adjacent to, and substantially parallel with, at least a portion of the side surface. Accordingly, in the second position the panel may be folded so that it is arranged next to the side of the housing. The side surface may be arranged substantially vertically, for example. This arrangement means that the landing platform remains accessible. The connector assembly may comprise a hinge to hingedly connect the panel to the housing, to facilitate rotational movement away from the landing area between the first position and the second position. Alternatively, the connector assembly may facilitate a sliding/linear movement between the first position and the second position. In some examples a portion of the panel may abut the side surface.

In a further arrangement the housing comprises a side surface, and in the second position the panel, which may be considered to be a first panel, is arranged substantially adjacent to, and substantially parallel with, at least a portion of the side surface. Then, in the second position, a second panel, which is part of the structure, is arranged substantially on top of the landing area.

The landing area may comprise a first edge and a second edge. The first panel may be arranged along the first edge, and the second panel may be arranged along the second edge. The first panel may be folded down by the side of the housing, and the second panel may be folded on top of the landing area. This may be advantageous if, due to the shape and size of the panels, both panels cannot be folded down respective sides of the housing or on top of the landing area. In a specific example, the panels are wider at their first, upper end than they are at their second, lower end and the first panel is arranged parallel with the direction of travel during transport. Similarly, in this specific example, the second panel is arranged perpendicular to direction of travel. Because of the shape of the panels, the arrangement in this specific example is more aerodynamic during transport.

In another arrangement, the UAV facility comprises an enclosure extending beneath the landing area, wherein, in the second position, the panel is arranged at least partially within the enclosure. Accordingly, the panel may be moved, positioned or retracted beneath the landing surface. This allows the panel to be stored more securely, and can help improve aerodynamics during transport. The connector assembly may comprise a hinge to hingedly connect the panel to the housing to facilitate rotational movement away from the landing area between the first position and an intermediate position, and the connector assembly may further comprise a mechanism to facilitate sliding/linear movement between the intermediate position and the second position.

In a further arrangement, in the second position, at least a portion of the panel extends away from the landing area in a direction above the landing area, such that the first end of the panel is arranged at the second height. Accordingly, in the second position the panel still protects the landing area from wind, but is arranged at a lower height. Thus, the height of the panel can be adjusted. This may be useful in low wind speed weather conditions to provide an element of protection, but the reduced height provides less of an obstruction during landing and takeoff.

In an example of this further arrangement, the panel may be made of two parts, one of which can be folded down, while the other remains in place, thus reducing the overall height of the structure. For example, the panel may comprise a lower panel portion comprising the second end, and an upper panel portion comprising the first end, and the connector assembly may comprise a hinge to hingedly connect the upper panel portion to the lower panel portion and to facilitate rotational movement between the first position and the second position. In the first position, the lower panel portion and the upper panel portion are substantially coplanar and in the second position, the upper panel portion is rotated towards the lower panel portion.

Movement to the second position may involve folding the panel substantially in half. In the first position, an angle subtended between the lower panel portion and the upper panel portion may be said to be between 170-190 degrees, and in the second position, an angle between the lower panel portion and the upper panel portion may be said to be between 0-90 degrees. Thus, in the second position, the lower panel portion is the portion of the panel which extends away from the landing area to provide an element of wind protection.

In another example of this further arrangement, the connector assembly facilitates a sliding movement between the first position and the second position. Accordingly, the panel may be moved into the second position by sliding the panel from the higher height to a lower height. The connector assembly may comprise a sliding mechanism to provide the sliding movement. For example, the connector may comprise a carriage which moves along a guide rail. In a specific example, the panel is retractable, thus allowing its height to be adjusted. For example, the panel may comprise a lower panel portion comprising the second end, and an upper panel portion comprising the first end. In the first position, the upper panel portion is arranged further above the landing area than the lower panel portion and in the second position, the upper panel portion is translated towards the lower panel portion. The panel could therefore be telescopic in that a narrower upper panel portion is translated towards and retracted into a wider lower panel portion. Alternatively, the the lower panel portion may be offset from upper panel portion such that the portions translate towards each other into an adjacent position.

The UAV facility may further comprise one or more sensors configured to monitor weather conditions and a controller. The controller may be configured to receive sensor data from the one or more sensors and cause the panel to move between at least the first position and the second position, based on the sensor data. Accordingly, the movement between the first and second positions can be automated based on weather conditions. For example, the sensor may be a weather sensor, used to measure windspeed, or other weather condition which may infer a change in windspeed. A drive mechanism may cause the panel to move in response. For example, the panel may initially be located in the second position, and the sensor may measure an increase in windspeed. If the windspeed exceeds a predetermined threshold, the controller can cause the panel to move into the first position, thereby providing protection.

Additionally or alternatively, the UAV facility may further comprise a communications system, configured to receive a data signal from a remote computing system and cause the panel to move between at least the first position and the second position, based on the data signal. Accordingly, the movement between the first and second positions can be automated based on a received signal. Thus, the UAV facility need not comprise its own sensor. In addition, it can be beneficial to allow the UAV facility to be remotely operated. For example, a remote computing system can control a plurality of UAV facilities within a geographical location.

Porosity is a measure of how porous a surface is and is defined as the total area of the voids/apertures on the surface divided by the total area of the surface. Thus, a solid surface has a porosity of 0. In some examples, the erectable wind-porous structure comprises a wind-porous element which has a porosity between 0.1-0.7 (or 10%-70%). Preferably, the wind porous structure has a porosity of between 0.1-0.3. A porosity value within this range provides an area large enough to provide protection to the UAV(s) on the landing area, while reducing windspeed and/or turbulence to an acceptable level.

As to the panel, the first end is arranged further above the landing area than the second end while in the first position. The panel is wind-porous and the porosity of the panel may generally increase from the second end towards the first end. Accordingly, the panel may have a porosity gradient along the panel, where the panel is more porous at the upper end. The presence of a gradient means that abrupt discontinuities can be avoided, so that the UAV can more stably transition between the wind-protected region and the unprotected region.

In a particular example the panel comprises two or more regions, each region having a different porosity. Thus, the porosity gradient can be provided by having two or more regions spaced in height. The regions may have the same height, or may be of different height. Preferably the panel comprises a first region having a porosity of about 0.1, a second region having a porosity of about 0.3 and a third region having a porosity of about 0.5. It has been found that such a porosity gradient reduces wind speed from about 30mph to about 10mph in the vicinity of the landing area.

In some arrangements, the panel delimits a plurality of adjustable apertures and a porosity of the structure is adjustable by varying the size of the apertures. Accordingly, the porosity can be varied. The porosity may be varied depending upon the wind conditions, size of the landing area, and/or mass of the UAVs for example. Varying the porosity allows the airflow characteristics to be manipulated and controlled. Some or all of the apertures may be adjustable. The apertures may be of equal size, or they may be of a different size. For example, larger apertures may be towards the top, and therefore fully opening all of the apertures provides a porosity gradient. The UAV facility may comprise one or more motors and/or actuators, to facilitate adjustment of the apertures.

In a specific example, the UAV facility comprises one or more sensors configured to monitor weather conditions and a controller is configured to receive sensor data from the one or more sensors and adjust the size of the apertures, based on the sensor data. Thus, the aperture size can be varied automatically in response to the sensor data. For example, the apertures may be made smaller, thereby reducing the porosity, if the wind speed is detected to increase.

In another example, the UAV facility comprises a communications system, configured to receive a data signal from a remote computing system and adjust the size of the apertures, based on the data signal. Thus, an external computing system may cause the aperture size to be adjusted. The instruction may be based on weather conditions, for example.

In one arrangement, the UAV facility comprises a drive mechanism, arranged to adjust a distance between the second end of the panel and the landing area when the panel is arranged in the first position. For example, the lower end of the panel can me moved further away from, or closer to the landing surface. Accordingly, the distance between the perimeter of the landing area and the panel can be varied. This is advantageous because the area of lowest windspeed is often not located directly behind the panel, and instead may be offset by a certain distance behind the panel. The optimum position behind the panel can be dependent upon windspeed, and so in some examples, the distance can be adjusted based on windspeed.

In some examples the structure comprises a plurality of panels for reducing wind speed across the landing area. Each of the plurality of panels are connected to the housing via a connector assembly and are moveable between the first position and the second position. Each panel can be moved between the first and second configuration. A plurality of panels can provide improved protection from different directions. The plurality of panels may be arranged along different sides of the landing area, for example.

Preferably, the plurality of panels are arranged to substantially surround the landing area, and in one arrangement may fully-surround the landing area,. Each panel may be arranged between two adjacent panels. Each panel may engage an adjacent panel to lock the panel in place.

In a specific example, the landing area defines a shape having four sides (such as a rectangle or square), and the plurality of panels comprise four panels for reducing wind speed across the landing area, the four panels being arranged substantially along the four sides.

In some examples, the structure may be arranged such that an obtuse angle is subtended between the structure and the landing area. For example, the wind-reducing netting or erectable wind-porous structure may be arranged in substantially two-dimensional plane which is angled with respect to the landing area. Thus, the structure and the landing area define two planes which are not arranged perpendicular to each other. Instead, the structure may be said to lean outwards. This arrangement increases the airspace above the landing area within which the UAV can fly. A larger airspace provides less of an obstruction for the UAV during landing and takeoff. In a particular example, the obtuse angle is substantially equal to 45 degrees because such an angle has also been found to reduce the abrupt onset of turbulence.

In some examples, the housing delimits an aperture through which to receive at least part of the UAV. For example, a hole or opening may be provided in an outer surface of the housing, such as the landing surface, which provides the UAV with access to inner parts of the housing and in particular contents therein. In a particular example, the UAV may be positioned above or nearby the aperture and a retractable tether or arm passes through the aperture. A package, or battery housed within the housing may be coupled to the tether or arm before being passed through the aperture. The size of the aperture is such that the UAV cannot fully pass through it.

In some examples, the UAV facility may further comprise a moveable platform, wherein the moveable platform defines at least part of the landing area and provides means to move the UAV inside the housing. The moveable platform may form the whole landing area/surface, or the landing area may comprise a fixed portion and a moveable portion, where the moveable portion is provided by the moveable platform. In some examples, the moveable platform itself delimits another aperture. For example, the platform may move through a large aperture formed in the housing, and a package may pass through a smaller aperture formed in the platform.

The UAV facility may further comprise a UAV positioning mechanism arranged on the housing, the UAV positioning mechanism being configured to position the UAV on the landing area. The positioning mechanism provides means to further accurately position the UAV on the landing area. The positioning mechanism may move the UAV from an initial landing position to a desired position. The initial landing position may vary due to a variety of factors, including the effects of wind. Example positioning mechanisms are described in U.S. provisional application number 62/558,192, entitled "Drone Delivery System" and in PCT application number PCT/US18/50926, entitled "Positioning Mechanism".

Further features and advantages of the disclosure will become apparent from the following description of preferred embodiments of the disclosure, given by way of example only, which is made with reference to the accompanying drawings.

### BRIEF DESCRIPTION OF THE DRAWINGS

Figure 1 is a perspective view of an unmanned aerial vehicle facility in accordance with an example;
Figure 2A is a side view of a UAV located on a moveable platform in accordance with an example;
Figure 2B is a side view of a UAV having been moved inside a housing by lowering the moveable platform of Figure 2A;
Figures 3A-B, 4A-B, 5A-B, 6A-C, 7A-D, 8A-D, and 9A-B are side views of example UAV facilities having an erectable structure;
Figure 10 is a side view of a porous structure in accordance with an example;
Figure 11A is a side view of a porous structure having a porosity gradient in accordance with a first example;
Figure 11B is a side view of a porous structure having a porosity gradient in accordance with a second example;
Figure 12 is a side view of a structure having adjustable apertures in accordance with an example; and
Figures 13A and 13B are side views of a UAV facility having a structure which is moveable with respect to the landing area;

### DETAILED DESCRIPTION OF CERTAIN INVENTIVE EMBODIMENTS

Disclosed are example UAV facilities. A UAV facility is a unit which can house a UAV, store packages, provide a landing surface, or act as a UAV battery charging/replacement unit.

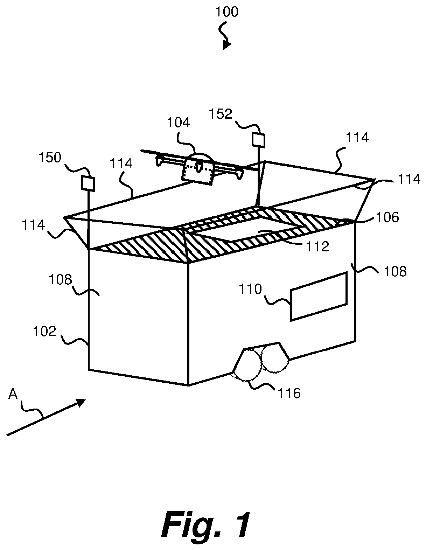

Figure 1 depicts an example UAV facility 100. The facility 100 comprises a transportable housing 102 for holding a UAV 104. The housing 102 defines a landing area/surface 106 upon which the UAV 104 can land. The housing 102 comprises a number of side surfaces 108. In this example there are four side surfaces, a base, and an upper surface, where the upper surface defines the landing area. In the example of Figure 1, the landing area is rectangular, and therefore has four sides, or edges. Other shaped landing areas are envisaged. In this example, the housing 102 is mounted or attached to a number of wheels 116 to provide the transportability. As mentioned previously, the facility may be towed by a vehicle, or it may be a vehicle itself.

The housing 102 defines a volume within which packages, UAVs, batteries, and/or other objects can be stored. Packages may be received within the housing via one or more ingress ports 110. Once loaded into the housing 102, the packages may be moved to a particular location within the housing 102 before being loaded onto a UAV 104.

The housing may delimit an aperture 112 through which at least part of the UAV 104 may pass. For example, the UAV 104 may enter the housing 102 via the aperture 112. Alternatively, the UAV may lower a coupling mechanism through the aperture 112. A package 206, shown initially on a loading surface 208, may be attachable to the coupling mechanism.

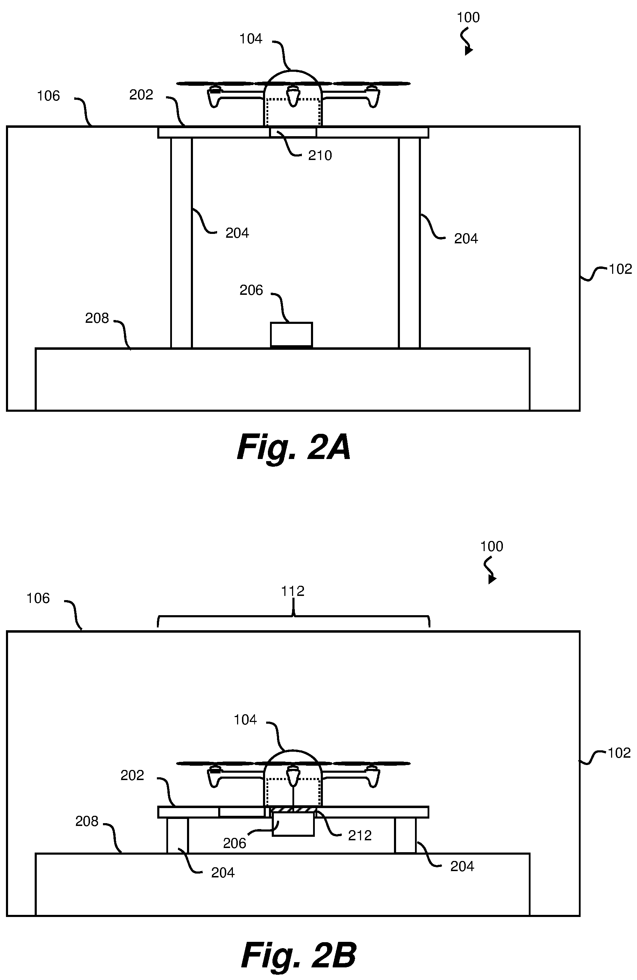

In one example, a moveable platform (shown in Figures 2A and 2B) forms part of the landing surface 106, and is therefore positionable within the aperture 112. Figure 2A depicts a side view of the UAV facility 100. The UAV 104 has landed on the surface 106 and is positioned upon a moveable platform 202. In some examples, the UAV facility comprises a UAV positioning mechanism (not shown) arranged on top of the housing 102. A UAV positioning mechanism is useful to position the UAV on the landing area 106. For example, the positioning mechanism may move the UAV from an initial landing position to a desired position, such as on top of the moveable platform 202.

The platform 202 may be lowered into the housing 102 by moving one or more bars 204. The bars 204 may be telescopic, for example, and can retract in length to move the platform 202 into the housing 102. A drive system (not shown) may control the lowering and raising of the moveable platform 202. For example, a controller (not shown) may instruct or cause the bars 204 to operate once the UAV 104 is positioned on the moveable platform 202. In this arrangement, the housing aperture 112 is in a closed position.

In some examples, the moveable platform 202 also delimits an aperture. In Figure 2A, the platform aperture is closed by one or more members 210, so is not visible. The one or more members 210 are therefore in a closed configuration, in which they form part of the landing surface 106 in Figure 2A. The drive system may be arranged to move the one or more members 210 into an open configuration.

Figure 2B shows the moveable platform 202 in a lowered position. The bars 204 have retracted in length such that the platform 202 and UAV 104 are located within the housing 102. The one or more members 210 have also been moved into an open configuration by the drive system. For example, the one or more members 210 have been withdrawn into a compartment within the moveable platform 202, so that the platform aperture 212 is open. In another example, one or more members 210 may act like a trapdoor and hinged with respect to the moveable platform 202. A coupling mechanism, attached to one end of a tether, has been lowered from a compartment within the UAV 104 to engage the package 206. Figure 2B therefore shows the package 206 as it is being lifted through the platform aperture 212 and into the UAV compartment. Once received within the UAV compartment, the platform 202 may be raised again to allow the UAV 104 to take flight and deliver the package 206 to a destination.

Returning again to Figure 1, the UAV facility 100 comprises a structure 114 for reducing wind speed across the landing area 106. The structure 114 may be a single part, or may be comprised of a plurality of parts. The structure 114 acts to shelter the UAV 104 from wind during landing and takeoff, and when the UAV 104 is resting upon the landing surface 106.

In a first example, which is not claimed, the structure 114 comprises wind-reducing netting for reducing wind speed across the landing area. For example, the netting may be suspended between, or wrapped around one or more rigid elements which support the netting when erected. In certain examples, the structure is erectable.

In a first aspect of the present invention, the structure 114 is an erectable wind-porous structure for reducing wind speed across the landing area. Thus, the structure 114 can be arranged in two or more different positions/configurations.

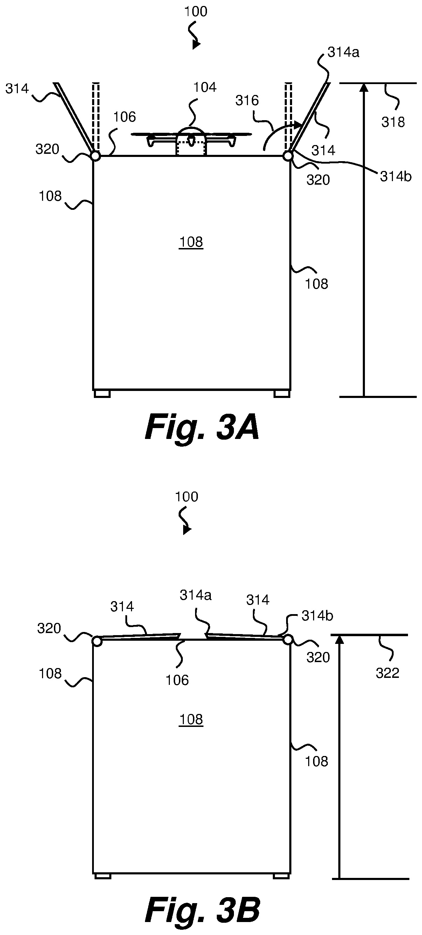

Figures 3A-9 depict a variety of example structures which are erectable and can therefore be adjusted.

Figure 3A depicts a front view of an example UAV facility 100 and corresponds to a view as seen in the direction of arrow "A" shown in Figure 1. The example facility 100 comprises a structure comprising one or more panels 314. The panels 314 are wind-porous. In another example, the structure may comprise one or more nets suspended between one or more rigid elements. In Figure 3A, only two side panels 314 are depicted. Similar front and rear panels may also be present, but are omitted for illustrative purposes.

The panels 314 are attached to the housing 102 via respective connector assemblies 320. In this example, the connector assemblies 320 comprise one or more hinges to allow the panels 314 to rotate with respect to the landing area 106.

In Figure 3A, the panels 314 are arranged such that an obtuse angle 316 is subtended between the panels and the landing surface 106. In other examples, however, the panels 314 may be arranged substantially vertically, in the positions indicated by dashed lines. In a further example, the panels 314 may be arranged such that an acute angle is subtended between the panels and the landing surface 106.

The panels 314 are arranged in a first, erected, position in Figure 3A. In this position, the panels extend away from the landing area 106 and a first, upper end 314a of the panel is arranged at a first height 318 above the ground. In this position, the panels 314 act to reduce wind speed across the landing area 106. Preferably, the panels 314 extend above the landing area by a distance such that the first end 314a extends above the UAV 104. The panels also comprise a second, lower, end 314b, which is on an opposite side from the first end 314a. In this example, the second ends 314b of the panels 314 are connected to the hinges 320.

The hinges 320 facilitate rotational movement of the panels 314 with respect to the landing area 106. For example, the panels 314 can rotate/pivot from the first position of Figure 3A to a second, folded, position shown in Figure 3B. For example, the panels 314 can rotate towards the landing area 106. Figure 3B depicts the UAV facility 100 of Figure 3A after the panels 314 have been moved into the second position. In this position, the panels 314 are arranged on top of the landing area 106. For example, both panels may rest on the landing area 106, or one panel may rest on top of another panel. The front and rear panels (not shown) may also be rotated towards the landing area 106 in a similar fashion. In this second position the first end 314a of each panel 314 is arranged at a second height 322, which is lower than the first height 318. The panels 314 may be arranged in this second position when the UAV facility 100 is not being used, such as during transport of the facility 100. This second position provides a more aerodynamic profile during transportation.

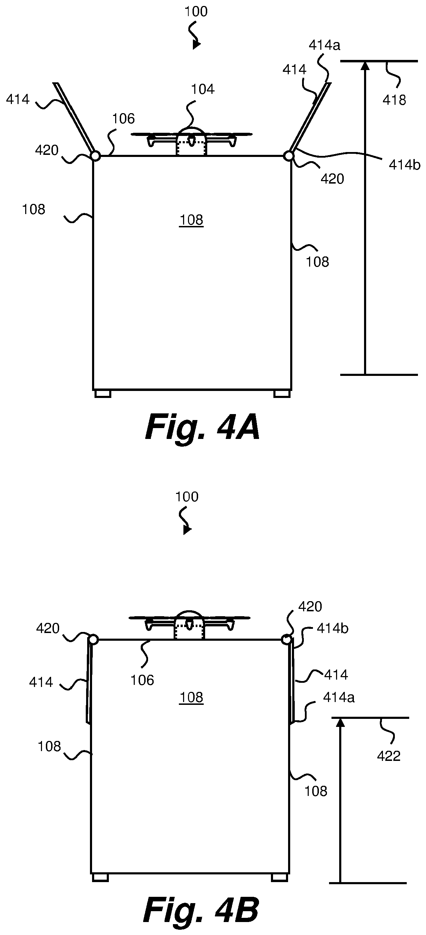

Figure 4A depicts a front view of another example UAV facility 100. Unlike the example of Figure 3A, the UAV facility of this example is arranged such that the panels rotate away from the landing area 106 into a second position in which the panels are adjacent to the side surfaces 108 of the housing 102, as shown in Figure 4B.

The example facility 100 comprises a structure comprising one or more panels 414. In another example, the structure may comprise one or more nets suspended between one or more rigid elements. As with Figures 3A and 3B, only two side panels 414 are depicted. Similar front and rear panels may also be present, but are omitted for illustrative purposes.

The panels 414 are arranged such that an obtuse angle is subtended between the panels and the landing surface 106. In other examples, however, the panels 414 may be arranged substantially vertically or be arranged such that an acute angle is subtended between the panels and the landing surface 106.

As with Figures 3A and 3B, the panels 414 are attached to the housing 102 via respective connector assemblies 420 such as one or more hinges to allow the panels 414 to rotate with respect to the landing area 106.

The panels 414 are arranged in a first, erected, position in Figure 4A. In this position, the panels extend away from the landing area 106 and a first, upper end 414a of the panel is arranged at a first height 418 above the ground. In this position, the panels 414 act to reduce wind speed across the landing area 106. The panels also comprise a second, lower, end 414b, which is on an opposite side from the first end 414a.

The hinges 420 facilitate rotational movement of the panels 414 with respect to the landing area 106. For example, the panels 414 can rotate/pivot from the first position of Figure 4A to a second, folded, position shown in Figure 4B. For example, the panels 414 can rotate away from the landing area 106. Figure 4B depicts the UAV facility 100 of Figure 4A after the panels 414 have been moved into the second position. In this position, the panels 414 are arranged adjacent to, and substantially parallel with, at least a portion of a side surface 108 of the housing 102. The front and rear panels (not shown) may also be rotated away from the landing area 106 in a similar fashion. In this second position the first end 414a of each panel 414 is arranged at a second height 422, which is lower than the first height 418. The panels 414 may be arranged in this second position when the UAV facility 100 is not being used, such as during transport of the facility 100. This second position provides a more aerodynamic profile during transportation.

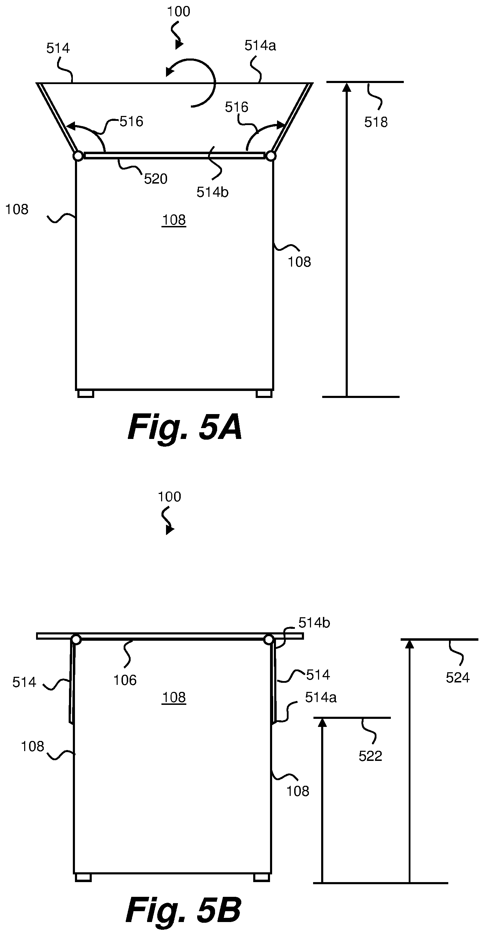

Figure 5A depicts a front view of another example UAV facility 100. Unlike the example of Figures 3B and 4B, the UAV facility of this example is arranged such that one or more panels rotate into a second position in which the panels are adjacent to the side surfaces 108 of the housing 102, and one or more other panels rotate into a second position in which the panels are on top of the landing area 106. This configuration is particularly advantageous in situations where the shape or size of the panels do not permit all of the panels to be folded on top of the landing area 106 or down the sides of the housing 102.

The example facility 100 comprises a structure comprising two or more panels 514. As for the examples described with reference to Figures 3A-4B, the structure may comprise two or more nets suspended between rigid elements. In Figure 5A, a front panel is depicted. The panel comprises a first end 514a that is longer in length than a second end 514b. At least one side panel is also present, but is obscured from view. A rear panel may also be present in some examples. The panel 514 is shaped like an isosceles trapezium such that the base angles 516 are equal. This means that the side panels are arranged so that an obtuse angle of equal measure is subtended between the side panel and the landing area. In a particular example, the base angles 516 are substantially equal to 45 degrees because such an angle has been found to reduce the abrupt onset of turbulence.

The panels 514 are attached to the housing 102 via respective connector assemblies 520. In this example, the connector assemblies 520 comprise one or more hinges to allow the panels 514 to rotate with respect to the landing area 106.

The panels 514 are arranged in a first, erected, position in Figure 5A. In this position, the panels extend away from the landing area 106 and first, upper ends 514a of the panels are arranged at a first height 518 above the ground. In this position, the panels 514 act to reduce wind speed across the landing area 106.

As with the examples described with reference to Figures 3A-4B, the hinges 520 facilitate rotational movement of the panels 514 with respect to the landing area 106. For example, the front and/or rear panels 514 can rotate/pivot from the first position of Figure 5A towards the landing area into a second, folded, position shown in Figure 5B. The side panels 514 can rotate/pivot from the first position of Figure 5A away from the landing area into a second, folded, position shown in Figure 5B. This configuration provides a particularly aerodynamic profile in situations where the UAV facility 100 is transported in a direction out of the page. In other examples however, the front/rear panels 514 can rotate away from the landing area 106 and the side panels 514 can rotate towards, and on top of, the landing area 106.

Figure 5B depicts the UAV facility 100 of Figure 5A after the panels 514 have been moved into the second position. In this position, the side panels 514 are arranged adjacent to, and substantially parallel with, at least a portion of a side surface 108 of the housing 102. The front and rear panels are arranged substantially on top of the landing area 106. In this second position the first end 514a of the side panels 514 are arranged at a second height 522, which is lower than the first height 518. The first end 514a of the front and rear panels 514 are arranged at a third height 524, which is lower than the first height 518 but higher than the second height 522.

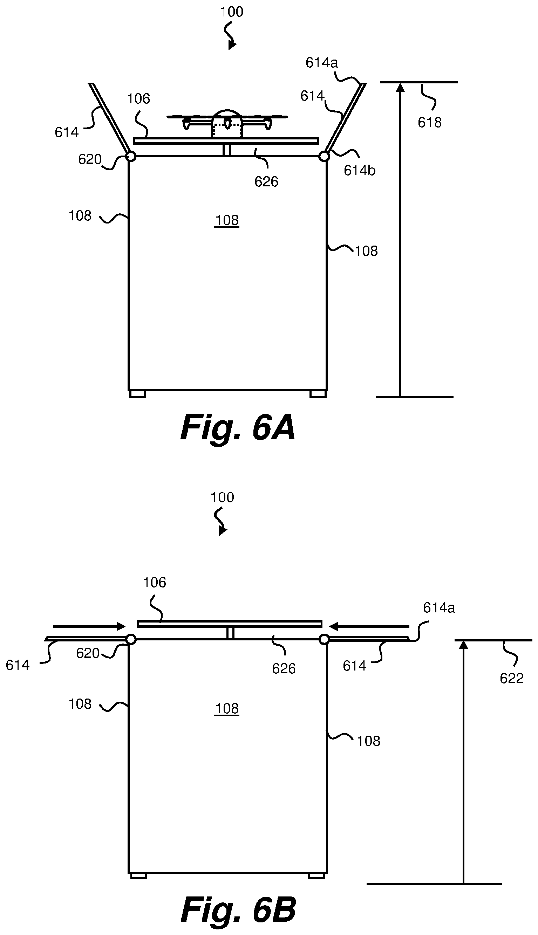

Figure 6A depicts a front view of another example UAV facility 100. Unlike the example of Figures 3A-5B, the UAV facility of this example is arranged such that one or more panels may be stored within an enclosure located directly beneath the landing area. This configuration is particularly advantageous to reduce wind resistance during transportation of the UAV facility.

As with the examples described with reference to Figures 3A-5B, the example facility 100 comprises a structure comprising one or more panels 614. In another example, the structure may comprise one or more nets suspended between rigid elements. In Figure 6A, only two side panels 614 are depicted. Similar front and rear panels may also be present, but are omitted for illustrative purposes.

The panels 614 are attached to the housing 102 via respective connector assemblies 620. In this example, the connector assemblies 620 comprise one or more hinges to allow the panels 614 to rotate with respect to the landing area 106. Unlike the examples depicted in Figures 3A-5B, the connector assemblies 620 of this example further comprise a mechanism to allow the panels 614 to translate such that they may be moved at least partially into the enclosure 626. Other types of connector assemblies 620 may be used which allow the panels 614 to be moved into the enclosure 626.

The enclosure 626, which is part of the housing, is formed directly beneath the landing area 106. The enclosure 626 may remain open once the panels 614 are stowed within the enclosure, or the housing 102 may comprise one or more doors to close the enclosure 626.

The panels 614 are arranged in a first, erected, position in Figure 6A. In this position, the panels extend away from the landing area 106 and first, upper ends 614a of the panels are arranged at a first height 618 above the ground. In this position, the panels 614 act to reduce wind speed across the landing area 106. In this example, second ends 614b of the panels 614 are connected to the connector assembly 620.

The connector assemblies 620 facilitate rotational movement of the panels 614 with respect to the landing area 106. For example, the panels 614 can rotate/pivot from the first position of Figure 6A away from the landing area into an intermediate position shown in Figure 6B.

Figure 6B depicts the UAV facility 100 of Figure 6A after the panels 614 have been moved into the intermediate position. In this position, the panels 614 are arranged substantially parallel with the landing area 106 and the first ends 614a of the side panels 614 are arranged at a second height 622, which is lower than the first height 618.

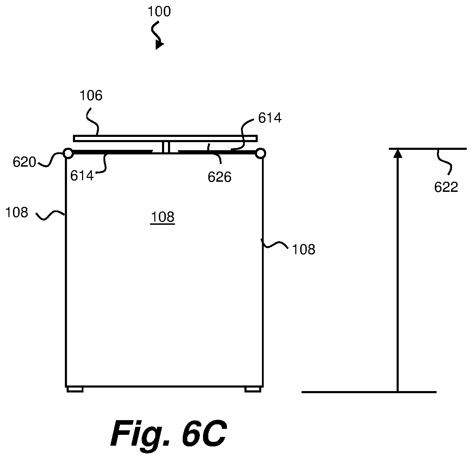

The connector assemblies 620 also facilitate translational/linear movement of the panels 614 with respect to the landing area 106. For example, the panels 614 can slide from the intermediate position of Figure 6B and into the enclosure 626 located underneath the landing area 106 into the position shown in Figure 6C.

Figure 6C depicts the UAV facility 100 of Figure 6A after the panels 614 have been moved into a second position. In this position, the panels 614 are arranged underneath, and are substantially parallel with, the landing area 106. In this position the first end 614a of the side panels 614 are arranged at the second height 622. In some examples, the panels 614 may be fully housed within the enclosure 626. In other examples, at least a portion of the panel 614 may extend out of the enclosure 626.

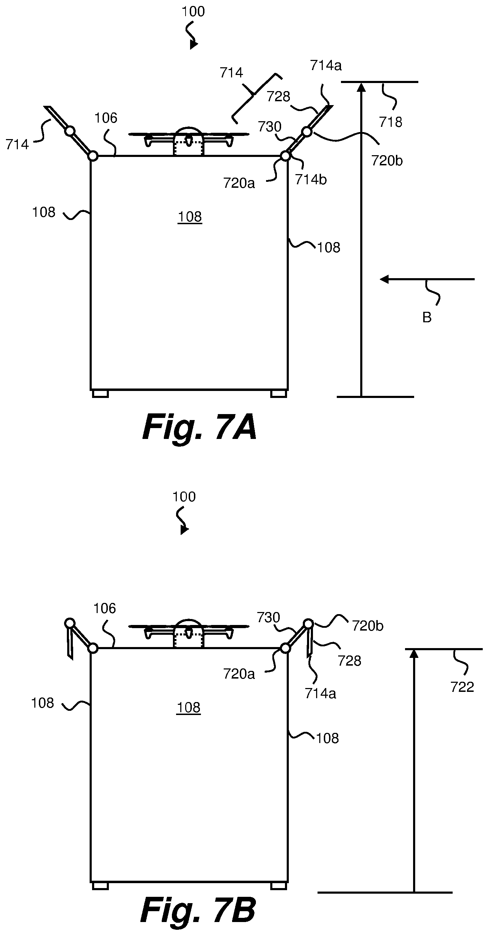

Figure 7A depicts a front view of another example UAV facility 100. Unlike the previous examples, the UAV facility of this example comprises panels which have an upper panel portion and a lower panel portion which are pivotable with respect to each other. The upper panel portion can be rotated relative to the lower panel portion to reduce the overall height of the structure. The lower panel portion can remain in its original position such that a portion of the panel still extends away from the landing area.

The example facility 100 comprises a structure comprising one or more panels 714, each having an upper panel portion 728 and a lower panel portion 730. In Figure 7A, only two side panels 714 are depicted. Similar front and rear panels may also be present, but are omitted for illustrative purposes.

In Figure 7A, the panels 714 are arranged such that an obtuse angle is subtended between the panels and the landing surface 106. In other examples, however, the panels 714 may be arranged substantially vertically.

The panels 714 are arranged in a first, erected, position in Figure 7A. In this position, the panels extend away from the landing area 106 and a first, upper end 714a of the upper panel portion 728 is arranged at a first height 718 above the ground. The lower panel portion 730 and the upper panel portion 728 are said to be substantially coplanar because an angle subtended between the panel portions 728, 730 is approximately 180 degrees. The lower panel portion 730 comprises a second, lower, end 714b, which is on an opposite side of the panel 714 from the first end 714a.

The panels 714 are attached to the housing 102 via respective connector assemblies. In this example, the connector assemblies 720 comprise two connectors 720a, 720b. The first connector 720a connects the lower panel portion 730 to the housing 102. The second connector 720b, such as a hinge, connects the lower panel portion 730 to the upper panel portion 728 and allows the two portions 728, 730 to rotate with respect to each other. In some examples, the first connector 720a is also a hinge, so that the whole panel 714 may rotate with respect to the landing surface.

As mentioned, the second connector 720b facilitates rotational movement of the upper panel portion 728 with respect to the landing area 106 and the lower panel portion 730. For example, the upper panel portion 728 can rotate/pivot from the first position of Figure 7A towards the lower panel portion 730 to a second, folded, position shown in Figure 7B. In this position, an acute angle is subtended between the panel portions 728, 730. The front and rear panels (not shown) may also behave in a similar fashion. In this second position the first end 714a of each panel 714 is arranged at a second height 722, which is lower than the first height 718. The panels 714 may be arranged in this second position when the UAV facility 100 is not being used, such as during transport of the facility 100, or at times when the wind speed is relatively slow. This second position provides less protection, but increases the airspace volume above the landing area.

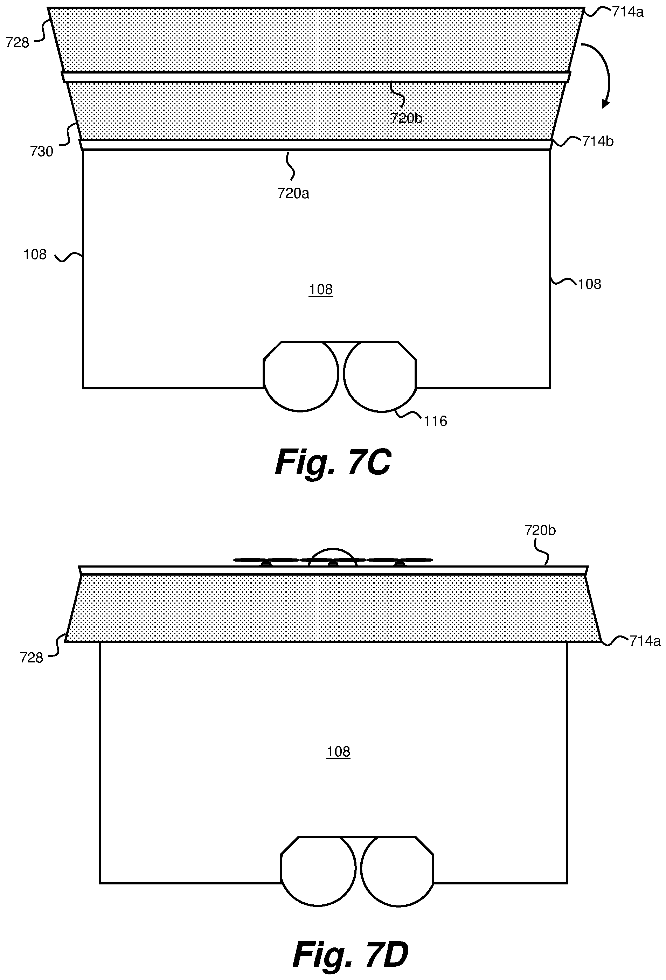

Figure 7C corresponds to a view as seen in the direction of arrow "B" shown in Figure 7A. The upper panel portion 728 in this example has a length dimension that is greater than that of the lower panel portion 730. In other examples the upper and lower panel portions have substantially the same length. Figure 7D shows the upper panel portion 728 after being rotated into the second position.

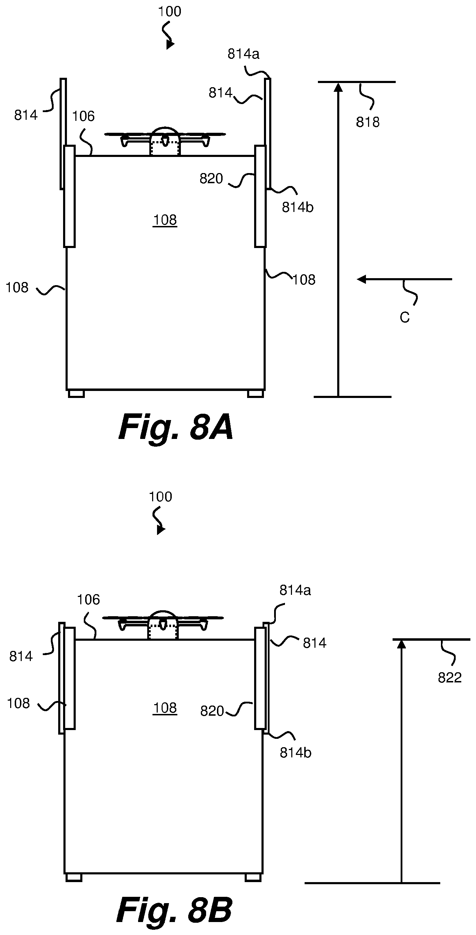

Figure 8A depicts a front view of another example UAV facility 100. Unlike the previous examples, the UAV facility of this example is arranged such that the connector assemblies facilitate a sliding, linear movement of the panels. This allows the overall height of the structure to be reduced.

As with the examples described with reference to Figures 3A-7D, the example facility 100 comprises a structure comprising one or more panels 814. In another example, the structure may comprise one or more nets suspended between one or more rigid elements. In Figure 8A, only two side panels 814 are depicted. Similar front and rear panels may also be present, but are omitted for illustrative purposes.

In Figure 8A, the panels 814 are arranged substantially vertically in a first, erected, position. In this position, the panels 814 extend away from the landing area 106 and a first, upper end 814a of the panel is arranged at a first height 818 above the ground. In this position, the panels 814 act to reduce wind speed across the landing area 106. The panels also comprise a second, lower, end 814b, which is on an opposite side from the first end 814a.

The panels 814 are attached to the housing 102 via respective connector assemblies 820. In this example, the connector assemblies 820 facilitate linear movement of the panels 814. For example, a connector assembly may comprise one or more guide rails, and the panel 814 is guided along the one or more guide rails.

As mentioned, the connector assemblies 820 facilitate a sliding movement of the panels 814. For example, the panels 814 can slide linearly from the first position of Figure 8A to a second, reduced height position shown in Figure 8B. In this second position, at least a portion of the panels 814 is arranged adjacent to, and substantially parallel with, at least a portion of a side surface 108 of the housing 102. A portion of the panels 814 may also extend away from the landing area to provide an element of wind protection. In other examples however, the first end 814a may be level with, or below the landing area 106. In any case, in this second position the first end 814a of each panel 814 is arranged at a second height 822, which is lower than the first height 818.

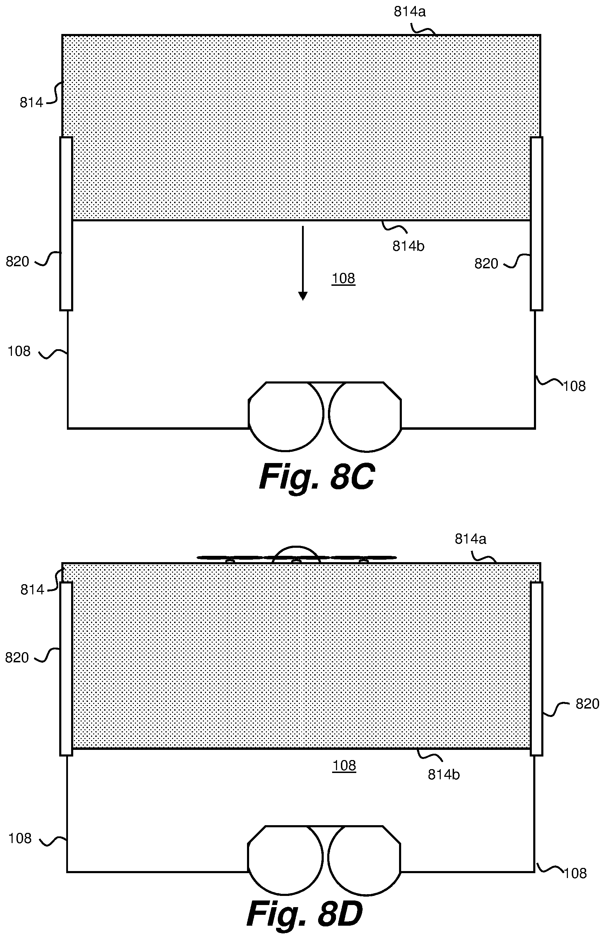

Figure 8C corresponds to a view as seen in the direction of arrow "C" shown in Figure 8A. Figure 8D shows a side panel 814 after being moved into the second, reduced height, position.

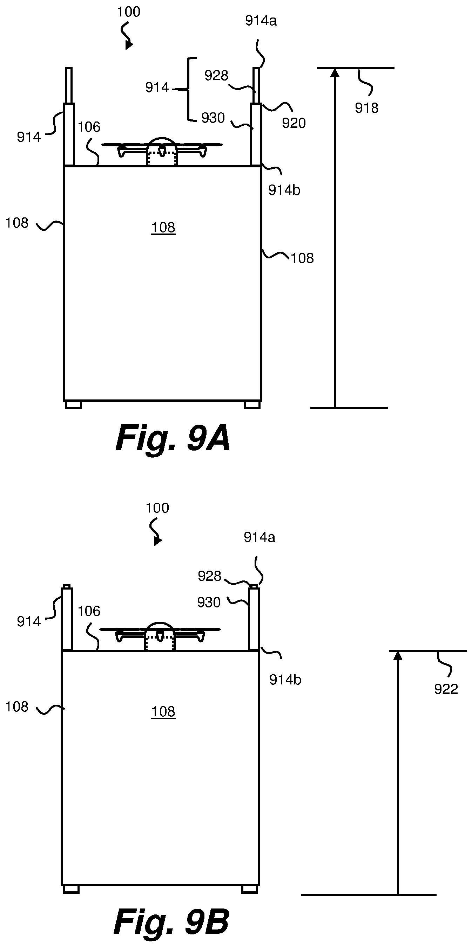

Figure 9A depicts a front view of another example UAV facility 100. In a similar way to the examples of Figures 7A-8D, the height of the structure can be reduced. However, in contrast to those examples, the structure of this example is telescopic in nature, so that a portion of the structure can be translated linearly to a lower height.

The example facility 100 comprises a structure comprising one or more panels 914, each having an upper panel portion 928 and a lower panel portion 930. In Figure 9A, only two side panels 914 are depicted. Similar front and rear panels may also be present, but are omitted for illustrative purposes.

The panels 914 are arranged in a first, erected, position in Figure 9A. In this position, the panels extend away from the landing area 106 and the upper panel portion 928 is arranged further above the landing area 106 than the lower panel portion 930. A first, upper end 914a of the upper panel portion 928 is arranged at a first height 918 above the ground. In this example, the lower panel portion 930 is wider than the upper panel portion 928 so that the upper panel portion 928 can be received within it. In other arrangements, the lower panel portion 930 may be narrower than the upper panel portion 928 so that the lower panel portion 928 is received within the upper panel portion 928. The lower panel portion 930 comprises a second, lower, end 914b, which is on an opposite side of the panel 914 to the first end 914a.

The panels 914 are attached to the housing 102 via respective connector assemblies 920. The connector assemblies 920 facilitate a sliding movement between a first, maximum height position, and a second, reduced height position. For example, the upper panel portion 928 can slide linearly from the first position of Figure 9A to a second, reduced height position shown in Figure 9B. In this second position, at least a portion of the panels 914 extend away from the landing area to provide an element of wind protection and the first ends 914a of each panel 914 are arranged at a second height 922, which is lower than the first height 918. The panels 914 may be arranged in this second position when the UAV facility 100 is not being used, such as during transport of the facility 100, or at times when the wind speed is relatively slow. This second position provides less protection, but provides less obstruction during landing and takeoff of the UAV.

In the examples described in relation to the Figures 3A-9B, the structures can be manually moved between the first and second positions. However, in other examples, the movement of the structures can be at least partially automated. For example, the UAV facility may comprise a controller, such as a processor, and a drive mechanism which causes the movement of the erectable structure between the two positions. The controller may instruct the drive mechanism to cause the structure to be moved between the first and second positions. The drive mechanism may comprise one or more motors, or actuators, for example, which operate to move the structure.

Returning to Figure 1, the example UAV facility 100 further comprises one or more sensors 150 configured to monitor weather conditions. Based on sensor data received from the sensors 150, a controller can cause the structure to move between the first position and the second position. For example, one or more panels may initially be in the second, folded, configuration. The sensors 150 may detect an increase in wind speed, and the controller may determine that the panels need to be erected. Accordingly, the controller instructs the drive mechanism to erect the panels in order to provide protection from the wind.

Alternatively, or additionally, the example UAV facility 100 also comprises a communications system 152 (shown depicted in Figure 1). The communications system 152 can receive a data signal from a remote computing system and cause the structure to move between the first position and the second position, based on the data signal. For example, a human operator located at the remote computing system may cause a signal to be sent to the UAV facility 100 to cause the structure to move. In another example, the signal may be sent without instruction from a human. For example, weather data received or measured at the remote computing system may trigger the signal to be sent.

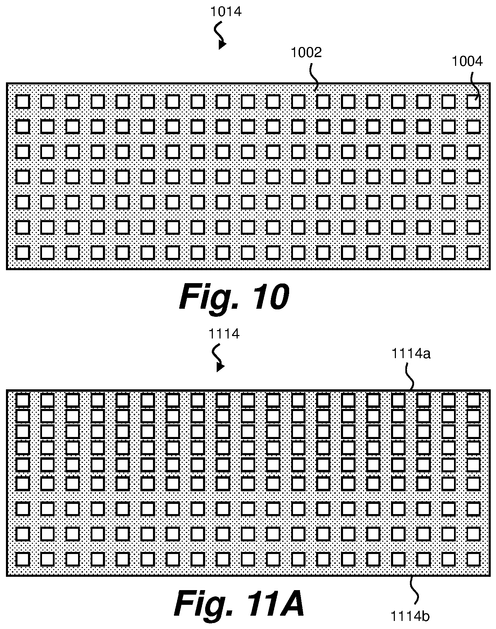

As mentioned, the structure described in Figures 1-9B comprises a wind porous element to allow wind to permeate through the structure. For example, the panels described in Figures 3A-9B are wind porous. Figure 10 depicts an example panel 1014 that is wind porous. The panel comprises a solid portion 1002, and a plurality of apertures/voids 1004. The apertures may be provided by drilling or cutting holes in an initially solid panel 1014 until the required porosity is achieved. Alternatively, the panel 1014 may be initially formed or molded with apertures present. The apertures in Figure 10 are distributed evenly across the panel 1014.

Figure 11A depicts another panel 1114 that is wind porous. Unlike the panel of Figure 10, the apertures are not evenly distributed across the surface of the panel. Instead, the porosity of the panel 1114 generally increases from the second, lower, end 1114b of the panel towards the first, upper end 1114a. Accordingly, the panel 1114 has a porosity gradient along the panel 1114, where the panel 1114 is more porous at the upper end 1114a. In one example, the porosity may be close to 0 the second end 1114b, and be closer towards 1 (such as 0.7) at the first end 1114a.

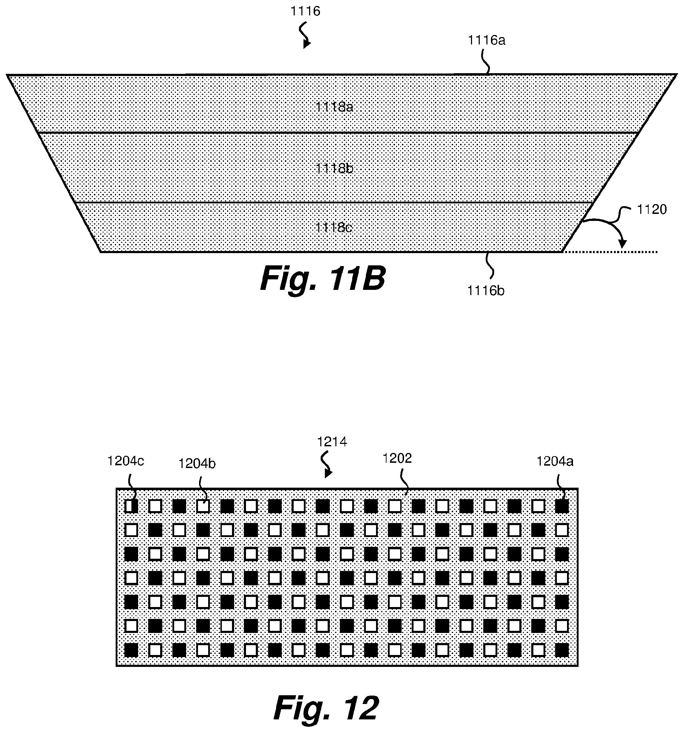

Figure 11B depicts another panel 1116 that is wind porous and has a porosity gradient that increases from the second, lower end 1116b of the panel towards the first, upper end 1116a. In this example the panel comprises three distinct regions 1118a, 1118b and 1118c. Within each region the apertures are substantially equally distributed so that the porosity within each region is uniform (in Figure 11B the apertures are omitted for illustrative purposes). However, the porosity differs between each of the three distinct regions 1118a, 1118b and 1118c. In one example, the lower region 1118c has a porosity of about 0.1, the middle region 1118b has a porosity of about 0.3 and the upper region 1118c has a porosity of about 0.5. For example, the lower region 1118c has a porosity of 0.07, the middle region 1118b has a porosity of 0.29 and the upper region 1118c has a porosity of 0.46. It has been found that such porosity values are particularly effective at reducing wind speed from about 30mph to less than about 10mph. At this reduced windspeed level certain UAVs can fly with little disturbance.

Although the example of Figure 11B comprises three distinct regions of differing porosity, there may be two or more distinct regions having different porosities.

Figure 12 depicts another panel 1214 that can be wind porous. Unlike the panels of Figures 10, 11A and 11B, the panel 1214 comprises a plurality of apertures that are closeable. The panel 1214 comprises a solid portion 1202, and a plurality of adjustable size apertures/voids 1204a-c. The apertures may be provided by valves, for example, which can open and close. Aperture 1204a is shown to be fully closed, aperture 1204b is shown to be fully open, and aperture 1204c is shown to be partially open. Movable members may move to close respective apertures, for example. In some examples, the apertures can either be open or closed. In other examples, the aperture size can be selected by partially opening the aperture. By opening or closing apertures and/or adjusting the aperture size, the porosity of the panel can be set to a desired level. Different wind conditions may favor different porosities, for example. Similarly, a porosity gradient can be provided by opening more apertures at one end of the panel.

In one example, the moveable members which close the apertures are themselves porous. Accordingly, even when all of the apertures are closed, the panel 1214 may still have an inherent porosity. In one variant, the porosity of the respective moveable members varies as a function of location between the first and second ends 1214a, 1214b of the panel 1214. Accordingly, even when all of the apertures are closed, the panel 1214 may have an inherent porosity gradient.

In a specific example, the aperture size can be varied based the weather conditions measured by one or more sensors 150 (shown in Figure 1). For example, a controller can cause the aperture size to be adjusted based on the sensor data. Similarly, the aperture size can be varied based on a data signal received from a remote computing system. For example, the communications system 152 (shown in Figure 1) may receive a data signal instructing the aperture size to be adjusted. Alternatively, the data signal may comprise weather data, and the communications system 152 determines whether to adjust the aperture size based on the received weather data.

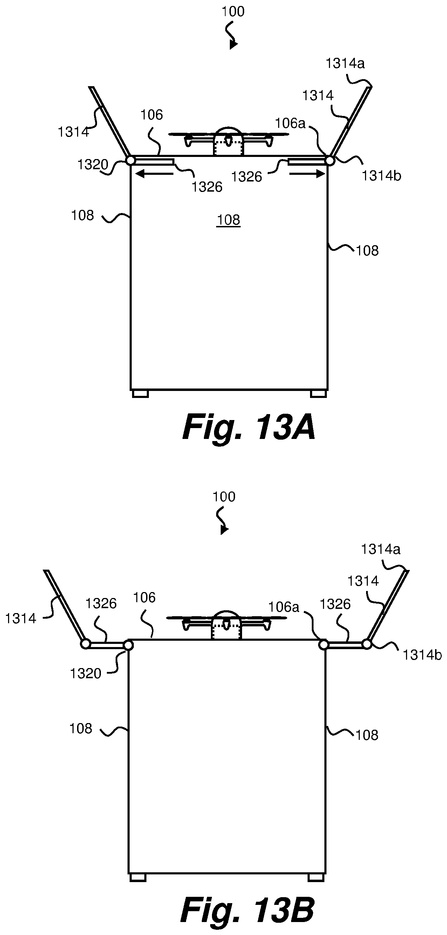

Figure 13A depicts a front view of another example UAV facility 100. The features of this example may be incorporated into any of those examples described in Figures 3A-9B. In this example, the structure can be moved to adjust the distance between the structure and the landing area. For example, the lower end of the structure can be moved further away from, or closer to the landing area.

The example facility 100 comprises a structure comprising one or more panels 1314. In another example, the structure may comprise one or more nets suspended between rigid elements. In Figure 13A, only two side panels 1314 are depicted. Similar front and rear panels may also be present, but are omitted for illustrative purposes.

The panels 1314 are attached to the housing 102 via respective connector assemblies 1320. The connector assemblies 1320 comprise a mechanism to allow the panels 1314 to translate so that they may be moved away from the landing area 106. For example, the connector assemblies may comprise one or more extension members 1326 which move along a guide rail.

The panels 1314 are arranged in a first, erected, position in Figure 13A. In this position, the second end 1314b of the panel is arranged directly adjacent to an edge 106a of the landing area. A drive mechanism (not shown) may be configured to adjust a distance between the second end 1314b of the panel 1314 and the landing area 106 when the panel is arranged in this first position.

Figure 13B depicts the UAV facility 100 of Figure 13A after the drive mechanism has caused the panels 1314 to be moved away from the landing area 106. In this position, the distance between the second end 1314b of the panel 1314 and the edge 106a of the landing area has increased when compared to the position of Figure 13A. Moving the panels 1314 further and away from the landing area 106 can control and adjust the turbulence at different positions across the landing area 106.

In some examples, the drive mechanism adjusts the distance between the second end 1314b of the panel and the landing area 106 based on sensor data received from one or more sensors 150 (shown in Figure 1). In other examples, the drive mechanism adjusts the distance between the second end 1314b of the panel and the landing area 106 based on a data signal received from a remote computing system via communications system 152 (also shown in Figure 1).

In the above embodiments, the UAV facility is considered to be transportable. For example, the housing is transportable.

The above embodiments are to be understood as illustrative examples. Further embodiments are envisaged and modifications not described above may also be employed without departing from the scope of the accompanying claims.

## Claims

1. A UAV facility (100), comprising:
a transportable housing (102) for holding a UAV (104), the housing defining a landing area (106) for the UAV; and
a wind-porous structure (114) erectable with respect to the landing area for reducing wind speed across the landing area, wherein the wind-porous structure is a panel delimiting a plurality of apertures, the plurality of apertures being distributed across the panel in two-dimensions.

2. The UAV facility of Claim 1, wherein the panel has a first end (314a; 414a; 514a; 614a; 714a; 814a; 914a; 1014a; 1114a; 1116a; 1314a) and a second end (314b; 414b; 514b; 614b; 714b; 814b; 914b; 1014b; 1114b; 1116b; 1314b) which is connected to the housing via a connector assembly (320; 420; 520; 620; 720; 820; 920; 1320),
wherein the connector assembly is arranged to facilitate movement of the panel with respect to the landing area, the movement being between at least a first position and a second position, wherein:
in the first position, the panel extends away from the landing area in a direction above the landing area, such that the first end of the panel is arranged at a first height; and
in the second position the first end of the panel is arranged at a second height, lower than the first height.

3. The UAV facility of Claim 1 or 2, wherein:
in the first position, an obtuse angle (316) is subtended between the structure and the landing area.

4. The UAV facility of any of Claims 2 or 3, wherein:
the connector assembly comprises a hinge to hingedly connect the panel to the housing, thereby facilitating rotational movement between the first position and second position; and
in the second position, the panel is arranged substantially on top of the landing area.

5. The UAV facility of any of Claims 2 or 3, wherein:
the housing comprises a side surface; and
in the second position, the panel is arranged substantially adjacent to, and substantially parallel with, at least a portion of the side surface (108).

6. The UAV facility of any of Claims 2 to 5, comprising:
one or more sensors configured to monitor weather conditions; and
a controller, configured to:
receive sensor data from the one or more sensors; and
cause the panel to move between at least the first position and the second position, based on the sensor data.

7. The UAV facility of any of Claims 2 to 6, comprising:
a communications system, configured to:
receive a data signal from a remote computing system; and
cause the panel to move between at least the first position and the second position, based on the data signal.

8. The UAV facility of any of Claims 1 to 7, wherein the erectable wind-porous structure comprises a wind-porous element which has a porosity between 0.1-0.7.

9. The UAV facility of any of Claims 2 to 7, wherein:
in the first position the first end is arranged further above the landing area than the second end;
the panel is wind-porous; and
the porosity of the panel generally increases from the second end towards the first end.

10. The UAV facility of Claim 9, wherein the panel comprises two or more regions, each region having a different porosity.

11. The UAV facility of Claim 10, wherein the panel comprises a first region (1118c) having a porosity of about 0.1, a second region (1118b) having a porosity of about 0.3 and a third region having a porosity of about 0.5 (1118a).

12. The UAV facility of any of Claims 1 to 7, wherein:
the structure delimits a plurality of adjustable apertures (1204a-c); and
a porosity of the structure is adjustable by varying the size of the apertures.

13. The UAV facility of Claim 12, comprising:
one or more sensors configured to monitor weather conditions; and
a controller, configured to:
receive sensor data from the one or more sensors; and
adjust the size of the apertures, based on the sensor data.

14. The UAV facility of Claims 12 or 13, comprising:
a communications system, configured to:
receive a data signal from a remote computing system; and
adjust the size of the apertures, based on the data signal.

15. The UAV facility of any of Claims 1 to 14, wherein the structure comprises:
a plurality of panels for reducing wind speed across the landing area.

## Patentansprüche

1. UAV-Einrichtung (100), umfassend:
ein transportables Gehäuse (102) zum Halten eines UAV (104), wobei das Gehäuse einen Landebereich (106) für das UAV definiert; und
eine winddurchlässige Struktur (114), die hinsichtlich des Landebereichs zum Verringern von Windgeschwindigkeit über dem Landebereich aufstellbar ist, wobei die winddurchlässige Struktur eine Platte ist, die eine Vielzahl von Öffnungen begrenzt, wobei die Vielzahl von Öffnungen in zwei Dimensionen über die Platte verteilt sind.

2. UAV-Einrichtung nach Anspruch 1, wobei die Platte ein erstes Ende (314a; 414a; 514a; 614a; 714a; 814a; 914a; 1014a; 1114a; 1116a; 1314a) und ein zweites Ende (314b; 414b; 514b; 614b; 714b; 814b; 914b; 1014b; 1114b; 1116b; 1314b), das über eine Verbinderanordnung (320; 420; 520; 620; 720; 820; 920; 1320) mit dem Gehäuse verbunden ist, aufweist,
wobei die Verbinderanordnung arrangiert ist, um eine Bewegung der Platte hinsichtlich des Landebereichs zu ermöglichen, wobei die Bewegung zwischen mindestens einer ersten Position und einer zweiten Position erfolgt, wobei:
in der ersten Position sich die Platte von dem Landebereich derart in eine Richtung oberhalb des Landebereichs wegerstreckt, dass das erste Ende der Platte an einer ersten Höhe arrangiert ist; und
in der zweiten Position das erste Ende der Platte an einer zweiten Höhe, die niedriger als die erste Höhe ist, arrangiert ist.

3. UAV-Einrichtung nach Anspruch 1 oder 2, wobei:
in der ersten Position zwischen der Struktur und dem Landebereich ein stumpfer Winkel (316) eingeschlossen ist.

4. UAV-Einrichtung nach einem der Ansprüche 2 oder 3, wobei:
die Verbinderanordnung ein Scharnier, um die Platte mit dem Gehäuse gelenkig zu verbinden, umfasst, wobei dadurch eine Drehbewegung zwischen der ersten Position und der zweiten Position ermöglicht wird; und
in der zweiten Position die Platte im Wesentlichen auf dem Landebereich arrangiert ist.

5. UAV-Einrichtung nach einem der Ansprüche 2 oder 3, wobei:
das Gehäuse eine Seitenoberfläche umfasst; und
in der zweiten Position die Platte im Wesentlichen angrenzend an und im Wesentlichen parallel zu mindestens einem Abschnitt der Seitenoberfläche (108) arrangiert ist.

6. UAV-Einrichtung nach einem der Ansprüche 2 bis 5, umfassend:
einen oder mehrere Sensoren, die konfiguriert sind, um Wetterbedingungen zu überwachen; und
eine Steuervorrichtung, die konfiguriert ist zum:
Empfangen von Sensordaten von dem einem oder den mehreren Sensoren; und
Veranlassen, dass sich die Platte basierend auf den Sensordaten zwischen mindestens der ersten Position und der zweiten Position bewegt.

7. UAV-Einrichtung nach einem der Ansprüche 2 bis 6, umfassend:
ein Kommunikationssystem, das konfiguriert ist zum:
Empfangen eines Datensignals von einem entfernten Rechensystem; und
Veranlassen, dass sich die Platte basierend auf dem Datensignal zwischen mindestens der ersten Position und der zweiten Position bewegt.

8. UAV-Einrichtung nach einem der Ansprüche 1 bis 7, wobei die aufstellbare winddurchlässige Struktur ein winddurchlässiges Element, das eine Durchlässigkeit von zwischen 0,1-0,7 aufweist, umfasst.

9. UAV-Einrichtung nach einem der Ansprüche 2 bis 7, wobei:
in der ersten Position das erste Ende weiter oberhalb des Landebereichs als das zweite Ende arrangiert ist;
die Platte winddurchlässig ist; und
die Durchlässigkeit der Platte im Allgemeinen von dem zweiten Ende zu dem ersten Ende hin zunimmt.

10. UAV-Einrichtung nach Anspruch 9, wobei die Platte zwei oder mehr Regionen umfasst, wobei jede Region eine unterschiedliche Durchlässigkeit aufweist.

11. UAV-Einrichtung nach Anspruch 10, wobei die Platte eine erste Region (1118c), die eine Durchlässigkeit von etwa 0,1 aufweist, eine zweite Region (1118b), die eine Durchlässigkeit von etwa 0,3 aufweist, und eine dritte Region, die eine Durchlässigkeit von etwa 0,5 (1118a) aufweist, umfasst.

12. UAV-Einrichtung nach einem der Ansprüche 1 bis 7, wobei:
die Struktur eine Vielzahl von anpassbaren Öffnungen (1204a-c) begrenzt; und
eine Durchlässigkeit der Struktur durch Variieren der Größe der Öffnungen anpassbar ist.

13. UAV-Einrichtung nach Anspruch 12, umfassend:
einen oder mehrere Sensoren, die konfiguriert sind, um Wetterbedingungen zu überwachen; und
eine Steuervorrichtung, die konfiguriert ist zum:
Empfangen von Sensordaten von dem einem oder den mehreren Sensoren; und
Anpassen der Größe der Öffnungen basierend auf den Sensordaten.

14. UAV-Einrichtung nach Anspruch 12 oder 13, umfassend:
ein Kommunikationssystem, das konfiguriert ist zum:
Empfangen eines Datensignals von einem entfernten Rechensystem; und
Anpassen der Größe der Öffnungen basierend auf dem Datensignal.

15. UAV-Einrichtung nach einem der Ansprüche 1 bis 14, wobei die Struktur umfasst:
eine Vielzahl von Platten zum Verringern von Windgeschwindigkeit über dem Landebereich.

## Revendications

1. Installation (100) pour véhicule aérien sans pilote, UAV, comprenant :
un boîtier transportable (102) permettant d'accueillir un UAV (104), le boîtier définissant une zone d'atterrissage (106) pour l'UAV ; et
une structure poreuse au vent (114) apte à être érigée par rapport à la zone d'atterrissage pour réduire la vitesse du vent sur la zone d'atterrissage, dans laquelle la structure poreuse au vent est un panneau délimitant une pluralité d'ouvertures, la pluralité d'ouvertures étant répartie sur le panneau en deux dimensions.

2. Installation pour UAV selon la revendication 1, dans laquelle le panneau a une première extrémité (314a ; 414a ; 514a ; 614a ; 714a ; 814a ; 914a ; 1014a ; 1114a ; 1116a ; 1314a) et une seconde extrémité (314b ; 414b ; 514b ; 614b ; 714b ; 814b ; 914b ; 1014b ; 1114b ; 1116b ; 1314b) qui est reliée au boîtier par l'intermédiaire d'un ensemble de liaison (320 ; 420 ; 520 ; 620 ; 720 ; 820 ; 920 ; 1320),
dans lequel l'ensemble de liaison est conçu pour faciliter le mouvement du panneau par rapport à la zone d'atterrissage, le mouvement se faisant entre au moins une première position et une seconde position, dans laquelle :
dans la première position, le panneau s'étend en s'éloignant de la zone d'atterrissage dans une direction au-dessus de la zone d'atterrissage, de telle sorte que la première extrémité du panneau est agencée à une première hauteur ; et
dans la seconde position, la première extrémité du panneau est agencée à une seconde hauteur, inférieure à la première hauteur.

3. Installation pour UAV selon la revendication 1 ou 2, dans laquelle :
dans la première position, un angle obtus (316) est sous-tendu entre la structure et la zone d'atterrissage.

4. Installation pour UAV selon l'une quelconque des revendications 2 ou 3, dans laquelle :
l'ensemble de liaison comprend une charnière pour relier de manière articulée le panneau au boîtier, facilitant ainsi le mouvement de rotation entre la première position et la seconde position ; et
dans la seconde position, le panneau est agencé sensiblement au-dessus de la zone d'atterrissage.

5. Installation pour UAV selon l'une quelconque des revendications 2 ou 3, dans laquelle :
le boîtier comprend une surface latérale ; et
dans la seconde position, le panneau est agencé de manière sensiblement adjacente et de manière sensiblement parallèle à au moins une partie de la surface latérale (108).

6. Installation pour UAV selon l'une quelconque des revendications 2 à 5, comprenant :
un ou plusieurs capteurs configurés pour surveiller des conditions météorologiques ; et
un dispositif de commande, configuré pour :
recevoir des données de capteur provenant du ou des capteurs ; et
provoquer le déplacement du panneau entre au moins la première position et la seconde position, sur la base des données de capteur.

7. Installation pour UAV selon l'une quelconque des revendications 2 à 6, comprenant :
un système de communications, configuré pour :
recevoir un signal de données d'un système informatique distant ; et
provoquer le déplacement du panneau entre au moins la première position et la seconde position, sur la base du signal de données.

8. Installation pour UAV selon l'une quelconque des revendications 1 à 7, dans laquelle la structure poreuse au vent apte à être érigée comprend un élément poreux au vent qui a une porosité comprise entre 0,1 et 0,7.

9. Installation pour UAV selon l'une quelconque des revendications 2 à 7, dans laquelle :
dans la première position, la première extrémité est agencée plus loin au-dessus de la zone d'atterrissage que la seconde extrémité ;
le panneau est poreux au vent ; et
la porosité du panneau augmente généralement de la seconde extrémité vers la première extrémité.

10. Installation pour UAV selon la revendication 9, dans laquelle le panneau comprend deux régions ou plus, chaque région ayant une porosité différente.

11. Installation pour UAV selon la revendication 10, dans laquelle le panneau comprend une première région (1118c) ayant une porosité d'environ 0,1, une deuxième région (1118b) ayant une porosité d'environ 0,3 et une troisième région ayant une porosité d'environ 0,5 (1118a).

12. Installation pour UAV selon l'une quelconque des revendications 1 à 7, dans laquelle :
la structure délimite une pluralité d'ouvertures réglables (1204a-c) ; et
une porosité de la structure est réglable en faisant varier la taille des ouvertures.

13. Installation pour UAV selon la revendication 12, comprenant :
un ou plusieurs capteurs configurés pour surveiller des conditions météorologiques ; et
un dispositif de commande, configuré pour :
recevoir des données de capteur provenant du ou des capteurs ; et
ajuster la taille des ouvertures, sur la base des données de capteur.

14. Installation pour UAV selon les revendications 12 ou 13, comprenant :
un système de communications, configuré pour :
recevoir un signal de données d'un système informatique distant ; et
ajuster la taille des ouvertures, sur la base du signal de données.

15. Installation pour UAV selon l'une quelconque des revendications 1 à 14, dans laquelle la structure comprend :
une pluralité de panneaux permettant de réduire la vitesse du vent sur la zone d'atterrissage.
